# EUROPÄISCHE PATENTSCHRIFT

(11) **EP 3 644 022 B1**
(45) Veröffentlichungstag und Bekanntmachung des Hinweises auf die Patenterteilung: **05.10.2022**
(21) Anmeldenummer: 19203299.3
(22) Anmeldetag: 15.10.2019
(51) Int. Cl.: G01F 1/66, G01F 1/667

(54) **VERFAHREN UND MESSEINRICHTUNG ZUR ERMITTLUNG EINER FLUIDGRÖSSE**
METHOD AND DEVICE FOR DETECTING FLUID VOLUME
PROCÉDÉ ET DISPOSITIF DE MESURE PERMETTANT DE DÉTERMINER UNE GRANDEUR DE FLUIDE

(30) Priorität: 24.10.2018 DE 102018008393
(43) Veröffentlichungstag der Anmeldung: 29.04.2020
(73) Patentinhaber: Diehl Metering GmbH, 91522 Ansbach (DE)
(72) Erfinder: Mayle, Michael, 91522 Ansbach (DE); Ploß, Peter, 95445 Bayreuth (DE); Benkert, Andreas, 91522 Ansbach (DE)
(74) Vertreter: Diehl Patentabteilung

(56) Entgegenhaltungen:
- EP-A1- 0 040 837
- DE-A1-102008 029 772
- DE-A1-102013 101 950
- RU-C1- 2 498 229
- US-A- 4 838 127

## Beschreibung

Die Erfindung betrifft ein Verfahren zur Ermittlung einer ein Fluid und/oder eine Fluidströmung des Fluids betreffenden Fluidgröße mit einer Messeinrichtung, die ein das Fluid aufnehmendes und/oder von dem Fluid durchströmtes Messrohr umfasst. Daneben betrifft die Erfindung eine Messeinrichtung.

Eine Möglichkeit, einen Durchfluss durch ein Messrohr zu messen, sind Ultraschallzähler.

Bei diesen wird wenigstens ein Ultraschallwandler genutzt, um eine Ultraschallwelle in ein durch ein Messrohr strömendes Fluid einzukoppeln, wobei diese auf einem geraden Weg oder nach mehreren Reflexionen an Wänden oder speziellen Reflexionselementen zu einem zweiten Ultraschallwandler geführt wird. Aus der Laufzeit der Ultraschallwelle zwischen den Ultraschallwandlern bzw. einem Laufzeitunterschied bei einer Vertauschung von Sender und Empfänger kann eine Durchflussgeschwindigkeit durch das Messrohr bestimmt werden.

Aus dem Artikel G. Lindner, "Sensors and actuators based on surface acoustic waves propagating along solid-liquid interfaces", J. Phys. D: Appl. Phys. 41 (2008) 123002, ist es bekannt, zur Anregung von geführten Wellen sogenannte Interdigitaltransducer zu nutzen, bei denen ein piezoelektrisches Element genutzt wird, das kammartig ineinandergreifende Steuerleitungen aufweist, um eine Anregung bestimmter Anregungsmoden geführter Wellen zu erreichen. Da notwendigerweise Scher-Moden des piezoelektrischen Elements angeregt werden, werden typischerweise keine hohen Wirkungsgrade der Anregung erreicht. Zudem ist eine relativ aufwändige, hochgenaue Lithographie erforderlich, um die erforderliche Elektrodenstruktur mit ausreichender Exaktheit aufzubringen, wobei häufig dennoch keine ausreichende Modenreinheit der Anregung erreicht wird.

DE102013101950-A1 offenbart ein Verfahren zur Messung einer Strömungsgeschwindigkeit fluider Medien, wobei zwei Gruppen von in einen jeweiligen Kanalwandabschnitt integrierten Ultraschallwandlern genutzt werden. Als Ansteuersignale werden elektrische Impulse, die aus einer zeitbegrenzten Sinusschwingung bestehen, genutzt, wobei die Impulse zeitverzögert an die einzelnen Wandler ausgegeben werden und wobei die Zeitverzögerung der Laufzeit der Plattenwellen zwischen benachbarten Ultraschallwandlern entspricht.

Eine Anregung einer modenreinen geführten Welle ist jedoch für eine Nutzung in einem Ultraschallzähler hochrelevant, da der Winkel, in dem Kompressionsschwingungen in das Fluid abgestrahlt werden, von der Phasengeschwindigkeit der geführten Welle abhängt, die typischerweise für unterschiedliche Anregungsmoden bei gleicher angeregter Frequenz unterschiedlich ist. Werden verschiedene Moden angeregt, so resultieren verschiedene Ausbreitungspfade für die Kompressionsschwingungen im Fluid, die allenfalls durch eine aufwändige Signalauswertung herausgerechnet werden können.

Der Erfindung liegt daher die Aufgabe zugrunde, ein Messverfahren anzugeben, das geführte Wellen zur Messung nutzt, wobei ein geringer Bauraumbedarf und ein einfacher Aufbau einer genutzten Messeinrichtung realisiert werden sollen und vorzugsweise eine möglichst modenreine Anregung von geführten Wellen erreicht werden soll.

Die Aufgabe wird erfindungsgemäß durch ein Verfahren der eingangs genannten Art gelöst, wobei durch einen an einer Seitenwand des Messrohrs angeordneten ersten und zweiten Sendeschwingungswandler gemeinsam eine in der Seitenwand des Messrohrs geführte Welle angeregt und direkt in der Seitenwand oder indirekt über das Fluid zu einem an der oder einer weiteren Seitenwand des Messrohrs angeordneten ersten und zweiten Empfangsschwingungswandlern oder entlang eines Ausbreitungspfades zurück zu den Sendeschwingungswandlern geführt und dort zur Ermittlung von Messdaten erfasst wird, wobei eine Fluidinformation, nämlich die Fluidgröße, in Abhängigkeit der Messdaten ermittelt wird, wobei
- einerseits der erste und der zweite Sendeschwingungswandler zur Anregung der geführten Welle derart angesteuert werden, dass der zeitliche Verlauf der Schwingungsamplitude des zweiten Sendeschwingungswandlers dem um eine Verzögerungszeit verzögerten zeitlichen Verlauf der Schwingungsamplitude des ersten Sendeschwingungswandlers entspricht, wobei die Verzögerungszeit derart vorgegeben wird, dass sie der Laufzeit einer bestimmten Schwingungsmode der geführten Welle zwischen der Mitte eines ersten Anregungsbereichs, in dem der erste Sendeschwingungswandler mit der Seitenwand gekoppelt ist, und der Mitte eines zweiten Anregungsbereichs, in dem der zweite Sendeschwingungswandler mit der Seitenwand gekoppelt ist, entspricht, wobei der Abstand zwischen den Mitten der Anregungsbereiche und eine Anregungsfrequenz und relative Phase, mit der die Sendeschwingungswandler zur Anregung der geführten Welle schwingen, derart gewählt werden, dass die bestimmte Schwingungsmode der anzuregenden geführten Welle durch eine destruktive Interferenz der durch die einzelnen Sendeschwingungswandler angeregten Teilwellen zumindest in einer Ausbreitungsrichtung zumindest teilweise ausgelöscht wird,
- und/oder wobei andererseits zur Ermittlung der Messdaten Ausgangssignale des ersten Empfangsschwingungswandlers und um eine weitere Verzögerungszeit verzögerte Ausgangssignale des zweiten Empfangsschwingungswandlers voneinander subtrahiert werden, wobei die weitere Verzögerungszeit derart vorgegeben wird, dass sie der Laufzeit der bestimmten Schwingungsmode der geführten Welle zwischen der Mitte eines zweiten Erfassungsbereichs, in dem der zweite Empfangsschwingungswandler mit der Seitenwand oder der weiteren Seitenwand gekoppelt ist, und der Mitte eines ersten Erfassungsbereichs, in dem der erste Empfangsschwingungswandler mit der Seitenwand oder der weiteren Seitenwand gekoppelt ist, entspricht, oder Ausgangssignale des ersten Sendeschwingungswandlers und um die Verzögerungszeit verzögerte Ausgangssignale des zweiten Sendeschwingungswandlers voneinander subtrahiert werden, wobei die Verzögerungszeit derart vorgegeben wird, dass sie der Laufzeit der bestimmten Schwingungsmode der geführten Welle zwischen der Mitte des ersten Anregungsbereichs, in dem der erste Sendeschwingungswandler mit der Seitenwand gekoppelt ist, und der Mitte des zweiten Anregungsbereichs, in dem der zweite Sendeschwingungswandler mit der Seitenwand gekoppelt ist, entspricht.

Es wird somit vorgeschlagen, sendeseitig und empfangsseitig jeweils zwei Schwingungswandler zu nutzen. Die beiden Sendeschwingungswandler koppeln jeweils eine Teilwelle in die Seitenwand des Messrohrs ein. Durch Überlagerung dieser Teilwellen resultiert die geführte Welle. Durch die Überlagerung der Teilwellen kann eine destruktive oder konstruktive Interferenz für einzelne Schwingungsmoden der geführten Welle resultieren. Dies kann dazu genutzt werden, durch eine entsprechende Wahl der geometrischen Anordnung, insbesondere des Abstands, der Sendeschwingungswandler und der genutzten Anregungsphase gezielt bestimmte Schwingungsmoden zu verstärken bzw. zu bedämpfen, wodurch eine gute Modenreinheit der geführten Welle erreicht werden kann. Aufgrund der endlichen Ausbreitungsgeschwindigkeit der geführten Welle bzw. der einzelnen Schwingungsmoden der geführten Welle ist der Amplitudenverlauf einer durch den ersten Sendeschwingungswandler angeregten Teilwelle an der Position des zweiten Sendeschwingungswandlers gegenüber dem Amplitudenverlauf der Anregung zeitlich verzögert und umgekehrt. Werden die gleichen Amplitudenverläufe am ersten und zweiten Sendeschwingungswandler genutzt, kann dies daher dazu führen, dass die durch den ersten und zweiten Schwingungswandler angeregten Teilwellen mit voneinander unterschiedlichen Amplituden überlagert werden, wobei das Überlagerungsverhältnis zeitabhängig ist. Dies kann die Modenreinheit der Anregung beeinträchtigen. Im Rahmen der Erfindung wurde jedoch erkannt, dass dies, zumindest für eine Ausbreitungsrichtung, dadurch vermieden werden kann, dass der zeitliche Verlauf der Schwingungsamplitude des zweiten Schwingungswandlers derart vorgegeben wird, dass er dem um eine Verzögerungszeit verzögerten zeitlichen Verlauf der Schwingungsamplitude des ersten Schwingungswandlers entspricht.

Im erfindungsgemäßen Verfahren werden zudem zwei Empfangsschwingungswandler genutzt oder beide Sendeschwingungswandler werden zum Empfangen einer zu dieser zurückkehrenden Welle genutzt. Wird nun das Ausgangssignal eines der empfangenen Schwingungswandler zu dem zeitlich verzögerten Ausgangssignal des anderen empfangenden Schwingungswandlers von diesem subtrahiert, so kann durch eine entsprechende Wahl der Verzögerungszeit eine destruktive Interferenz für bestimmte Schwingungsmoden erreicht werden, so dass eine empfangsseitige Modenselektivität erreicht wird.

Der zeitliche Verlauf der Schwingungsamplitude eines jeweiligen Schwingungswandlers kann auch als Einhüllende bzw. als Hüllkurve dieser Schwingung bezeichnet werden. Diese Hüllkurve soll für den zweiten Sendeschwingungswandler der zeitlich verzögerten Hüllkurve für den ersten Sendeschwingungswandler entsprechen. Hierunter kann insbesondere verstanden werden, dass die Hüllkurve für den zweiten Sendeschwingungswandler identisch zu der zeitlich verzögerten Hüllkurve für den ersten Sendeschwingungswandler ist. Es ist jedoch auch möglich, dass diese Hüllkurven beispielsweise aufgrund von Bauteiltoleranzen, Alterungsprozessen oder Ähnlichem, geringfügig voneinander abweichen. Als Hüllkurve kann im einfachsten Fall eine Rechteckfunktion genutzt werden, das heißt der jeweilige Sendeschwingungswandler wird für ein vorgegebenes Zeitintervall mit einer im Wesentlichen festen Amplitude betrieben. Um jedoch eine breitbandige Schwingungsanregung zu vermeiden, kann es vorteilhaft sein, die Schwingungsamplitude am Beginn der Hüllkurve über ein gewisses Zeitintervall hinweg kontinuierlich zu steigern bzw. am Ende der Hüllkurve kontinuierlich zu senken. Beispielsweise können gaußförmige oder dreieckige Hüllkurvenformen genutzt werden.

Wie bereits eingangs erläutert ist es beispielsweise für Durchflussmessungen zweckmäßig, nicht ausschließlich eine Laufzeit eines Ultraschallsignals in eine Richtung zu erfassen, sondern einen Laufzeitunterschied bei einer Umkehrung der Funktion von Sender und Empfänger zu erfassen. Daher können die Sendeschwingungswandler bzw. Empfangsschwingungswandler derart eingerichtet und ansteuerbar sein, dass sie auch jeweils die umgekehrte Funktion erfüllen können, also dass die Sendeschwingungswandler als Empfangsschwingungswandler genutzt werden können um umgekehrt.

Die sendeseitige Modenreinheit bzw. die empfangsseitige Modenselektivität kann potentiell dadurch weiter verbessert werden, dass mehr als zwei Sendeschwingungswandler bzw. mehr als zwei Empfangsschwingungswandler genutzt werden. Je nach Anordnung dieser Schwingungswandler zueinander und der zu selektierenden Mode kann die beschriebene Verzögerung des Verlaufs der Schwingungsamplitude bzw. der Ausgangssignale für mehrere Sende- bzw. Empfangsschwingungswandler erfolgen. Hierbei können jeweils gleiche Verzögerungszeiten bzw. weitere Verzögerungszeiten oder voneinander unterschiedliche Verzögerungszeiten bzw. weitere Verzögerungszeiten gewählt werden.

Der erste und zweite Sendeschwingungswandler können zur Anregung der geführten Welle derart angesteuert werden, dass die Schwingung des zweiten Sendeschwingungswandlers der um die Verzögerungszeit verzögerten Schwingung des ersten Sendeschwingungswandlers entgegengesetzt ist. Insbesondere kann zur Anregung der geführten Welle der erste Sendeschwingungswandler mit einem ersten Ansteuersignal angesteuert werden und der zweite Sendeschwingungswandler mit einem zweiten Ansteuersignal, wobei das zweite Ansteuersignal dem um die Verzögerungszeit verzögerten ersten Ansteuersignal entspricht. Die Ansteuersignale für den ersten und zweiten Sendeschwingungswandler können beispielsweise über separate Digital-Analog-Wandler bereitgestellt werden, wobei beide Wandler das gleiche bzw. ein invertiertes Signal mit zeitlichem Versatz zueinander ausgeben. Alternativ könnte beispielsweise auch ein analoges Verzögerungsglied genutzt werden.

Die Verzögerungszeit wird so gewählt, dass sie der Laufzeit einer bestimmten Mode zwischen den Sendeschwingungswandlern entspricht. Wird in diesem Fall das gesamte Ansteuersignal verzögert, so führt dies für die bestimmte Mode je nach genutzter Polarität des Ansteuersignals zu einer destruktiven Interferenz der bestimmten Schwingungsmode, also einer Überlagerung der angeregten Teilwellen bezüglich dieser bestimmten Schwingungsmode mit einem Phasenversatz von 180°. Dies ist beispielsweise vorteilhaft, wenn eine modenselektive Anregung erreicht werden soll.

In anderen Anwendungsfällen kann es jedoch beispielsweise gewünscht sein, die Aussendung der geführten Welle bzw. einer bestimmten Mode der geführten Welle in eine Raumrichtung zu unterdrücken, also eine gerichtete Abstrahlung zu erreichen. Dies kann, wie später noch genauer erläutert werden wird, insbesondere erreicht werden, wenn die Sendeschwingungswandler mit einem Phasenversatz von 90° zueinander schwingen. Soll ein solcher Phasenversatz jedoch ausschließlich durch Wahl der Verzögerungszeit eingestellt werden, führt dies bei endlicher Anregungslänge zu einer Abweichung der Amplitude der von dem ersten Sendeschwingungswandler in den Anregungsbereich des zweiten Sendeschwingungswandlers einlaufenden Teilschwingung bzw. Schwingungsmode und der angeregten Teilschwingung, da die Verzögerungszeit notwendig von der Laufzeit der geführten Welle zwischen den Sendeschwingungswandlern abweichen müsste. Es kann somit gewünscht sein, eine Phasenlage der Anregungen durch die Sendeschwingungswandler unabhängig von dem zeitlichen Verlauf der Schwingungsamplitude der Sendeschwingungswandler vorzugeben.

Dies kann dadurch erreicht werden, dass für den ersten und zweiten Sendeschwingungswandler periodische Steuersignale bereitgestellt werden, die eine vorgegebene Phasenlage zueinander aufweisen, wobei diese jeweils durch eine Hüllkurve amplitudenmoduliert werden, um ein jeweiliges Steuersignal bereitzustellen. Die Hüllkurven können die gleiche Form aufweisen, wobei die Hüllkurve für das Steuersignal des zweiten Sendeschwingungswandlers gegenüber der Hüllkurve für den ersten Sendeschwingungswandler um die Verzögerungszeit zeitversetzt ist.

Beispielsweise kann zur Anregung der geführten Welle der erste Sendeschwingungswandler mit einem durch eine erste Hüllkurve amplitudenmodulierten ersten periodischen Steuersignal angesteuert werden und der zweite Sendeschwingungswandler mit einem durch eine zweite Hüllkurve amplitudenmodulierten zweiten periodischen Steuersignal angesteuert werden, wobei das zweite periodische Steuersignal gegenüber dem ersten periodischen Steuersignal einen Phasenversatz von 90° aufweist. Hierdurch kann insbesondere eine gerichtete Abstrahlung erreicht werden, wenn beispielsweise Sendeschwingungswandler genutzt werden, deren Mitten einen Abstand aufweisen, der ein ungeradzahliges Vielfaches eines Viertels der Wellenlänge einer bestimmten Schwingungsmode in der Seitenwand ist. In diesem Fall überlagert sich diese Mode in einer Ausbreitungsrichtung konstruktiv und in der anderen destruktiv.

Die Verzögerungszeit wird derart vorgegeben, dass sie der Laufzeit einer bestimmten Schwingungsmode der geführten Welle zwischen der Mitte eines ersten Anregungsbereichs, in dem der erste Sendeschwingungswandler mit der Seitenwand gekoppelt ist, und der Mitte eines zweiten Anregungsbereichs, in dem der zweite Sendeschwingungswandler mit der Seitenwand gekoppelt ist, entspricht, und/oder die weitere Verzögerungszeit kann derart vorgegeben werden, dass sie der Laufzeit der bestimmten Schwingungsmode der geführten Welle zwischen der Mitte eines zweiten Erfassungsbereichs, in dem der zweite Empfangsschwingungswandler mit der Seitenwand oder der weiteren Seitenwand gekoppelt ist, und der Mitte eines ersten Erfassungsbereichs, in dem der erste Empfangsschwingungswandler mit der Seitenwand oder der weiteren Seitenwand gekoppelt ist, entspricht. Hierdurch kann erreicht werden, dass die Teilschwingungen mit passend aufeinander abgestimmten Schwingungsamplituden angeregt werden bzw. die Ausgangssignale mit aufeinander abgestimmten Empfangsamplituden empfangen werden, da die Signallaufzeit zwischen den Sendeschwingungswandlern bzw. den Empfangsschwingungswandlern berücksichtigt wird.

Insbesondere kann die Laufzeit der bestimmten Schwingungsmode und somit die Verzögerungszeit in Abhängigkeit der Phasengeschwindigkeit der bestimmten Schwingungsmode vorgegeben sein oder werden. Die Phasengeschwindigkeit der bestimmten Schwingungsmode für eine bestimmte Anregungsfrequenz kann aus der Dispersionsrelation der Seitenwand entnommen werden, die z.B. als Lookup-Tabelle vorliegen kann. Insbesondere kann die Lauf- bzw. Verzögerungszeit dem Quotienten des Abstands der Mitten der Anregungs- bzw. Erfassungsbereiche und der Phasengeschwindigkeit der bestimmten Schwingungsmode entsprechen. Eine Ermittlung der Verzögerungs- bzw. Laufzeit anhand der Phasengeschwindigkeit stellt sicher, dass die Verzögerungszeit auf die konkrete Wellenlänge der bestimmten Mode abgestimmt ist, insbesondere um eine im Wesentlichen vollständig destruktive oder konstruktive Interferenz für die bestimmte Mode zu realisieren.

Die bestimmte Schwingungsmode kann insbesondere eine Schwingungsmode sein, die in wenigstens eine Ausbreitungsrichtung bedämpft werden soll. Durch das Verfahren soll insbesondere erreicht werden, dass ein hohes Signal-zu-Rausch-Verhältnis erreicht werden kann. Da ein Empfang bzw. ein Senden von nicht gewünschten Moden zu diesem Rauschen beitragen kann, kann dies besonders gut dadurch erreicht werden, dass nicht gewünschte Schwingungsmoden bedämpft werden, insbesondere dann, wenn nur zwei Schwingungsmoden angeregt werden, da in diesem Fall ausschließlich die gewünschte Schwingungsmode verbleibt. Gemäß einem Verfahren, das nicht Teil der beanspruchten Erfindung ist, wäre es jedoch auch möglich, die Verzögerungszeit bzw. die Abstände der Mitten so vorzugeben, dass eine optimale konstruktive Interferenz für die bestimmte Schwingungsmode erreicht wird. Die Sende- bzw. Empfangsschwingungswandler können in den Anregungsbereichen bzw. Empfangsbereichen in unmittelbarem mechanischen Kontakt mit der Seitenwand bzw. der weiteren Seitenwand des Messrohrs stehen. Beispielsweise können sie an diese Seitenwand angeklemmt oder angeklebt sein. Es ist jedoch auch möglich, dass die Kopplung indirekt, also beispielsweise über eine viskose Schicht oder ein den Sende- bzw. Empfangsschwingungswandler tragendes Kupplungselement erfolgt.

Die Sendeschwingungswandler werden derart angesteuert, dass die Schwingungen des zweiten Schwingungswandlers zu der um die Verzögerungszeit verzögerten Schwingung des ersten Schwingungswandlers entgegengesetzt sind bzw. werden die Ausgangssignale der Empfangsschwingungswandler subtrahiert, so resultiert eine sende- und/oder empfangsseitige destruktive Interferenz bzw. Auslöschung der bestimmten Mode, wodurch bei einer Anregung von nur zwei Schwingungsmoden eine hohe Modenselektivität für die andere Mode erreicht werden kann.

Der Abstand zwischen den Mitten der Anregungsbereiche und eine Anregungsfrequenz und relative Phase, mit der die Sendeschwingungswandler zur Anregung der geführten Welle schwingen, werden derart gewählt, dass die bestimmte oder eine weitere Schwingungsmode der anzuregenden geführten Welle durch eine destruktive Interferenz der durch die einzelnen Schwingungswandler angeregten Teilwellen zumindest in einer Ausbreitungsrichtung zumindest teilweise ausgelöscht wird. Eine Abstimmung von Abstand und relativer Phase der Anregung ist insbesondere dann relevant, wenn die relative Phasenlage der Schwingungen der Sendeschwingungswandler unabhängig von der Verzögerungszeit vorgegeben wird, also beispielsweise wenn für die Schwingungswandler periodische Steuersignale mit vorgegebener Phasenlage bereitgestellt werden, die mit einer jeweiligen Hüllkurve amplitudenmoduliert werden. Die Vorgabe der Frequenz ist relevant, da die Anregungsfrequenz vorgibt, welche Schwingungsmode bzw. welche Schwingungsmoden angeregt werden. Eine destruktive Interferenz kann beispielsweise realisiert werden, indem der Abstand zwischen den Mitten der halben Wellenlänge der zu dämpfenden Schwingungsmode entspricht, wobei die Sendeschwingungswandler in Phase schwingen. Alternativ kann der Abstand zwischen den Mitten der ganzen Wellenlänge der zu dämpfenden Schwingungsmode entsprechen und die Sendeschwingungswandler können mit einem Phasenversatz von 180°, also invertiert zueinander, schwingen. Wie bereits erwähnt, kann die zu dämpfende Schwingungsmode auch richtungsabhängig bedämpft werden, wenn ein Phasenversatz von 90° und ein Abstand zwischen den Mitten, der einem ungeradzahligen Vielfachen eines Viertels der Wellenlänge der zu bedämpfenden Schwingungsmode entspricht, gewählt werden.

Die oder eine Anregungsfrequenz, mit der die Sendeschwingungswandler zur Anregung der geführten Wellen schwingen, kann derart gewählt werden, dass ausschließlich die bestimmte und die oder genau eine weitere Schwingungsmode angeregt werden. Dies ist besonders vorteilhaft, da hierbei durch Bedämpfen der gewählten oder der weiteren Schwingungsmode durch eine destruktive Interferenz wie vorangehend erläutert die jeweils andere Schwingungsmode jeweils mit hoher Modenreinheit angeregt werden kann.

Die oder eine Anregungsfrequenz, mit der die Sendeschwingungswandler zur Anregung der geführten Welle schwingen, kann insbesondere derart gewählt werden, dass die weitere Schwingungsmode die doppelte oder halbe Wellenlänge der bestimmten Schwingungsmode aufweist. Wird der Abstand zwischen den Mitten der Anregungsbereiche in diesem Fall so gewählt, dass er der Wellenlänge der kürzeren dieser Schwingungsmoden entspricht, so kann durch ein gleichphasiges Schwingen der Sendeschwingungswandler die Schwingungsmode mit der längeren Wellenlänge bedämpft werden und durch ein gegenphasiges Schwingen die Schwingungsmode mit der kürzeren Wellenlänge. Ein Umschalten zwischen diesen Schwingungen kann beispielsweise durch ein Invertieren eines Ansteuersignals oder ein Vertauschen der Elektrodenbeschaltung erfolgen. Somit ist mit einfachen Mitteln eine Umschaltung zwischen zwei verschiedenen Schwingungsmoden möglich, die jeweils mit hoher Modenreinheit angeregt werden können.

Die Sendeschwingungswandler und/oder Empfangsschwingungswandler können piezoelektrische Schwingungswandler sein. Vorzugsweise werden relativ einfache Elektrodenstrukturen genutzt. Beispielsweise können nur zwei gegenüberliegende Elektroden vorgesehen sein, wobei eine dieser Elektroden oder beide Elektroden zur leichteren Kontaktierung abschnittsweise um den jeweiligen Schwingungswandler herumgeführt sein kann und/oder als Blechelektrode von dem Schwingungswandler abstehen kann. Vorzugsweise wird eine Dickenschwingung des Schwingungswandlers senkrecht zur Seitenwand des Messrohrs angeregt.

Durch das erfindungsgemäße Verfahren können Messungen an einer durch das Messrohr strömenden Fluidströmung, jedoch auch an einem in dem Messrohr stehenden Fluid durchgeführt werden. Die Nutzung eines Schwingungstransports zur Erfassung von Fluideigenschaften ist prinzipiell im Stand der Technik bekannt. Beispielsweise werden in Ultraschallzählern häufig Laufzeitunterschiede einer Laufzeit einer Schwingung zwischen einem ersten und einem zweiten Ultraschallwandler und umgekehrt erfasst und hieraus kann eine Flussgeschwindigkeit bestimmt werden. Es können jedoch auch andere Messdaten ausgewertet werden, um Fluideigenschaften zu bestimmen. Beispielsweise kann eine Signalamplitude am empfangenden Schwingungswandler ausgewertet werden, um eine Dämpfung der Schwingung beim Transport durch das Fluid zu erfassen. Amplituden können auch frequenzabhängig ausgewertet werden und es können absolute oder relative Amplituden bestimmter Spektralbereiche ausgewertet werden, um ein spektral unterschiedliches Dämpfungsverhalten im Fluid zu erfassen. Auch Phasenlagen unterschiedlicher Frequenzbänder können ausgewertet werden, um beispielsweise Informationen über die Dispersionsrelation im Fluid zu gewinnen. Alternativ oder ergänzend können auch Veränderungen der spektralen Zusammensetzung bzw. der Amplitude über die Zeit, beispielsweise innerhalb eines Messpulses, ausgewertet werden.

Durch Auswertung dieser Größen können als Fluidgrößen beispielsweise eine Durchflussgeschwindigkeit und/oder ein Durchflussvolumen und/oder eine Dichte, Temperatur und/oder Viskosität des Fluids ermittelt werden. Ergänzend oder alternativ können beispielsweise eine Schallgeschwindigkeit im Fluid und/oder eine Zusammensetzung des Fluids, beispielsweise ein Mischungsverhältnis unterschiedlicher Komponenten, ermittelt werden. Verschiedene Ansätze zur Gewinnung dieser Fluidgrößen aus den vorangehend erläuterten Messgrößen sind im Stand der Technik bekannt und sollen daher nicht detailliert dargestellt werden. Beispielsweise können Zusammenhänge zwischen einer oder mehreren Messgrößen und der Fluidgröße empirisch ermittelt werden und es kann beispielsweise eine Look-Up-Tabelle oder eine entsprechende Formel genutzt werden, um die Fluidgröße zu ermitteln.

Neben dem erfindungsgemäßen Verfahren betrifft die Erfindung eine Messeinrichtung, umfassend ein das Fluid aufnehmendes und/oder von dem Fluid durchströmbares Messrohr, einen an einer Seitenwand des Messrohrs angeordneten ersten und zweiten Sendeschwingungswandlers und eine Steuereinrichtung, wobei die Messeinrichtung zur Durchführung des erfindungsgemäßen Verfahrens eingerichtet ist.

Es kann ausreichen, ausschließlich Sendeschwingungswandler vorzusehen, wenn diese auch zur Erfassung der Messdaten dienen. Dies kann beispielsweise der Fall sein, wenn die geführte Welle ausschließlich in der Seitenwand zu den Sendeschwingungswandlern zurückgeführt wird. Hierdurch können beispielsweise Verspannungen oder Verformungen der Seitenwand aufgrund eines Drucks des Fluids erkannt werden. Es ist auch möglich, dass in das Fluid eingekoppelte Druckschwingungen von einem Reflektor reflektiert und zurück zu den Sendeschwingungswandlern geführt werden. Besonders vorteilhaft können jedoch zusätzlich Empfangsschwingungswandler vorgesehen werden, beispielsweise um eine übliche Durchflussmessung zu ermöglichen.

Die Steuereinrichtung kann insbesondere dazu eingerichtet sein, gemäß dem vorangehend erläuterten Verfahren die Sendeschwingungswandler anzusteuern und Ausgangssignale der Sendeschwingungswandler bzw. der Empfangsschwingungswandler zu erfassen und zu verarbeiten. Die relative Anordnung der verschiedenen Schwingungswandler zueinander und die Ansteuerung und Datenverarbeitung kann erfolgen, wie dies zum erfindungsgemäßen Verfahren erläutert wurde.

Weitere Vorteile und Einzelheiten der Erfindung zeigen die folgenden Ausführungsbeispiele sowie die zugehörigen Zeichnungen. Hierbei zeigen schematisch:
- Fig. 1: ein Ausführungsbeispiel einer erfindungsgemäßen Messeinrichtung, durch das ein Ausführungsbeispiel des erfindungsgemäßen Verfahrens ausführbar ist, und
- Fig. 2 und 3: schematische Darstellungen zur Steuerung der Sendeschwingungswandler bzw. zur Erfassung der Messdaten in zwei Ausführungsbeispielen des erfindungsgemäßen Verfahrens.

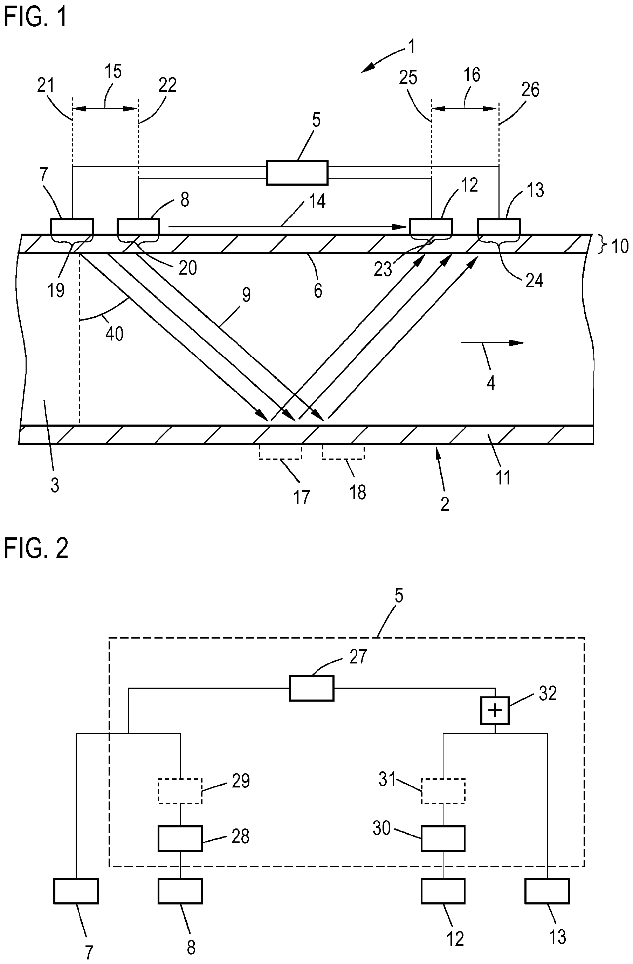

Fig. 1 zeigt eine Messeinrichtung 1 zur Ermittlung einer ein Fluid und/oder eine Fluidströmung betreffenden Fluidgröße. Beispielhaft ist eine Einrichtung zur Erfassung eines Fluiddurchflusses dargestellt. Alternativ könnten jedoch beispielsweise auch ein Druck, eine Fluidzusammensetzung oder Ähnliches ermittelt werden. Das Fluid ist hierbei in dem Innenraum 3 des Messrohrs 2 aufgenommen und wird in Richtung des Pfeils 4 durch diesen Innenraum 3 geführt. Um die Fluidgröße, insbesondere ein Durchflussvolumen, zu ermitteln, kann durch die Steuereinrichtung 5 eine Laufzeitdifferenz zwischen den Laufzeiten von den Sendeschwingungswandlern 7, 8 zu den Empfangsschwingungswandlern 12, 13 und umgekehrt ermittelt werden. Hierbei wird ausgenutzt, dass diese Laufzeit von einer Geschwindigkeitskomponente des Fluids parallel zu einer Ausbreitungsrichtung eines Ultraschallstrahls 9 durch das Fluid abhängt. Aus der Laufzeitdifferenz kann somit eine über den Pfad des jeweiligen Ultraschallstrahls 9 gemittelte Flussgeschwindigkeit in Richtung des jeweiligen Ultraschallstrahls 9 und somit näherungsweise eine gemittelte Strömungsgeschwindigkeit in dem von den Ultraschallstrahlen 9 durchquerten Volumen ermittelt werden.

Um einerseits eine Anordnung der Sende- und Empfangsschwingungswandler 7, 8, 12, 13 außerhalb des Messrohrs 2 zu ermöglichen und andererseits eine Empfindlichkeit bezüglich unterschiedlicher Strömungsgeschwindigkeiten an unterschiedlichen Positionen des Strömungsprofils zu reduzieren, wird durch die Sendeschwingungswandler 7, 8 bzw. für die umgekehrte Messrichtung durch die Empfangsschwingungswandler 12, 13 nicht direkt ein Ultraschallstrahl 9, also eine Druckwelle, in dem Fluid induziert. Stattdessen wird durch die Sende- bzw. Empfangsschwingungswandler 7, 8, 12, 13 eine geführte Welle in der Seitenwand 6 des Messrohrs 3 angeregt. Diese geführte Welle ist schematisch durch den Pfeil 14 dargestellt. Die Anregung erfolgt mit einer Frequenz, die derart gewählt ist, dass eine Lamb-Welle in der Seitenwand 6 angeregt wird. Solche Wellen können angeregt werden, wenn die Dicke 10 der Seitenwand 6 vergleichbar mit der Wellenlänge der Transversalwelle im Festkörper ist, welche sich aus dem Verhältnis der Schallgeschwindigkeit der Transversalwelle im Festkörper und der angeregten Frequenz ergibt.

Durch die geführte Welle werden Kompressionsschwingungen des Fluids angeregt, die im gesamten Ausbreitungspfad der geführten Welle in das Fluid abgestrahlt werden. Dies ist schematisch durch die in Strömungsrichtung zueinander versetzten Ultraschallstrahlen 9 dargestellt. Die abgestrahlten Ultraschallstrahlen 9 werden an der gegenüberliegenden Seitenwand 11 reflektiert und über das Fluid zurück zu der Seitenwand 6 geführt. Dort regen die auftreffenden Ultraschallstrahlen 9 erneut eine geführte Welle in der Seitenwand 6 an, die durch die Empfangsschwingungswandler 12, 13 erfasst werden kann, um die Laufzeit zu bestimmen. Ergänzend ist es möglich, dass die geführte Welle auch, wie durch den Pfeil 14 angedeutet ist, direkt über die Seitenwand von den Sendeschwingungswandlern 7, 8 zu den Empfangsschwingungswandlern 12, 13 geführt wird, beispielsweise um eine Temperatur über den Einfluss der Temperatur auf die Ausbreitungsgeschwindigkeit der geführten Welle in der Seitenwand 6 zu ermitteln oder einen Fluiddruck dadurch zu ermitteln, dass hierdurch verursachte Verformungen bzw. Verspannungen der Seitenwand aufgrund ihres Einflusses auf die Schallgeschwindigkeiten in der Seitenwand 6 erkannt werden.

Die Ultraschallstrahlen 9 werden in dem gezeigten Ausführungsbeispiel genau einmal durch die Seitenwand 11 reflektiert. Es wäre jedoch auch möglich, die Ultraschallstrahlen 9 ohne eine solche Reflexion über weitere Schwingungswandler 17, 18 zu erfassen, die an der Seitenwand 11 angeordnet sind, oder einen längeren Ausbreitungspfad mit mehreren Reflexionen vor einer Erfassung vorzusehen.

Bei dem geschilderten Vorgehen ist es problematisch, dass die Dispersionsrelation für Lamb-Wellen in der Seitenwand 6 mehrere Zweige aufweist. Bei einer Anregung mit einer bestimmten durch die Steuereinrichtung 5 vorgegebenen Frequenz wäre es somit möglich, dass unterschiedliche Schwingungsmoden für die Lamb-Welle angeregt werden, die unterschiedliche Phasengeschwindigkeiten aufweisen. Dies führt dazu, dass die Kompressionswellen in Abhängigkeit dieser Phasengeschwindigkeit mit unterschiedlichen Rayleigh-Winkeln 40 abgestrahlt werden. Hieraus resultieren unterschiedliche Pfade für die Führung der Ultraschallwelle von den Sendeschwingungswandlern 7, 8 zu den Empfangsschwingungswandlern 12, 13 bzw. umgekehrt. Die empfangenen Signale für diese verschiedenen Ausbreitungspfade müssten durch eine aufwändige Signalverarbeitung durch die Steuereinrichtung 5 separiert werden, um die Fluidgröße bestimmen zu können. Dies erfordert einerseits eine aufwändige Steuereinrichtung 5 und ist andererseits nicht in allen Anwendungsfällen robust möglich. Daher soll durch die Sendeschwingungswandler 7, 8 bzw. für die umgekehrte Durchstrahlungsrichtung durch die Empfangsschwingungswandler 12, 13 eine möglichst modenreine Anregung von geführten Wellen erfolgen bzw. empfangsseitig sollen nicht gewünschte Schwingungsmoden herausgefiltert werden.

In der Messeinrichtung 1 kann eine gute Modenreinheit der Anregung dadurch erreicht werden, dass die Sendeschwingungswandler 7, 8 in voneinander beabstandeten Anregungsbereichen 19, 20 mit der Seitenwand 6 des Messrohrs 2 gekoppelt sind. In Fig. 1 ist eine unmittelbare Kopplung an die Seitenwand 6 dargestellt, prinzipiell wäre es jedoch auch möglich, zwischen den Sendeschwingungswandlern 7, 8 und der Seitenwand 6 eine viskose Kopplungsschicht, ein Kopplungselement oder Ähnliches vorzusehen. Die in den Anregungsbereichen 19, 20 angeregten Teilwellen überlagern sich zu der geführten Welle. Durch eine Abstimmung des Anregungsverlaufs und der Anordnung der Sendeschwingungswandler 7, 8 zueinander kann erreicht werden, dass eine nicht gewünschte Schwingungsmode destruktiv interferiert.

Um ein möglichst hohes Signal-zu-Rausch-Verhältnis zu erreichen, ist es vorteilhaft, eine gemeinsame Anregungsfrequenz für die Sendeschwingungswandler 7, 8 vorzugeben, bei der ausschließlich zwei Schwingungsmoden einer Lamb-Welle in der Seitenwand 6 anregbar sind, nämlich genau eine asymmetrische und genau eine symmetrische Schwingungsmode. In diesem Fall kann die jeweils nicht gewünschte dieser Schwingungsmoden gezielt bedämpft werden, um eine im Wesentlichen modenreine Anregung zu erreichen. Dies kann dadurch erreicht werden, dass der Abstand 15 zwischen den Mitten 21, 22 der Anregungsbereiche 19, 20 und die Phasenlage der Anregung der Sendeschwingungswandler 7, 8 entsprechend aufeinander abgestimmt werden, so dass die nicht gewünschte Schwingungsmode bei Überlagerung der Teilwellen destruktiv interferiert. Beispielsweise kann der Abstand 15 der halben Wellenlänge der zu bedämpfenden Schwingungsmode entsprechen und die Sendeschwingungswandler 7, 8 können in Phase schwingen oder der Abstand 15 kann der Wellenlänge der zu bedämpfenden Schwingungsmode entsprechen und die Sendeschwingungswandler 7, 8 können mit einem Phasenversatz von 180° schwingen.

Hierbei werden die Sendeschwingungswandler typischerweise nur für ein relativ kurzes Zeitintervall betrieben, so dass ein zeitlicher Verlauf der Schwingungsamplitude des jeweiligen Sendeschwingungswandlers 7, 8 resultiert. Da eine Schwingungsmode einer Teilwelle, die durch den Sendeschwingungswandler 7 im Anregungsbereich 19 angeregt wird, den Anregungsbereich 20 erst nach einer gewissen Verzögerungszeit erreicht, die dem Quotienten des Abstands 15 und der Phasengeschwindigkeit dieser Schwingungsmode entspricht, würde dies in dem Fall, wenn die Schwingungsamplituden beider Sendeschwingungswandler 7, 8 den gleichen zeitlichen Verlauf aufweisen, dazu führen, dass zumindest in einem Teil des Anregungsintervalls die Schwingungsmoden der verschiedenen Teilwellen mit voneinander unterschiedlichen Amplituden überlagert werden, wodurch eine geringere Bedämpfung einer zu bedämpfenden Schwingungsmode resultieren würde und somit auch ein schlechteres Signal-zu-Rausch-Verhältnis als bei einer dauerhaften Anregung einer entsprechenden geführten Welle.

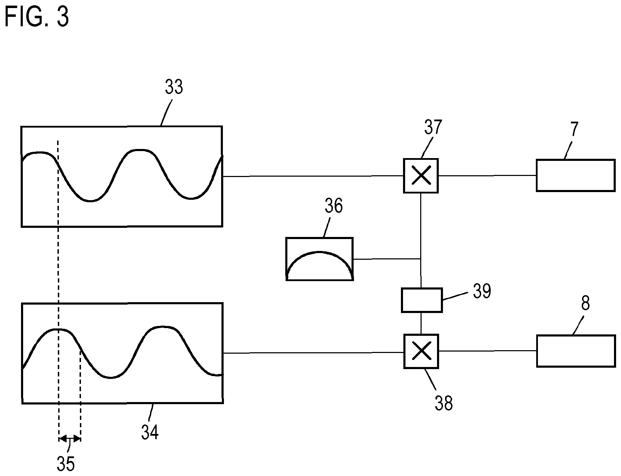

Um diese Problematik zu vermeiden, werden die Sendeschwingungswandler 7, 8 durch die Steuereinrichtung 5 derart angesteuert, dass der zeitliche Verlauf der Schwingungsamplitude des Sendeschwingungswandlers 8 dem um eine Verzögerungszeit verzögerten zeitlichen Verlauf der Schwingungsamplitude des Sendeschwingungswandlers 7 entspricht. Diese Verzögerungszeit entspricht der Laufzeit einer bestimmten, der zu bedämpfenden, Schwingungsmode der geführten Welle zwischen den Mitten 21, 22 der Anregungsbereiche 19, 20. Verschiedene Möglichkeiten für eine derartige Anregung werden später noch mit Bezug auf Fig. 2 und 3 erläutert werden. Empfangsseitig kann eine Modenselektion bzw. -filterung dadurch erfolgen, dass Ausgangssignale der Empfangsschwingungswandler 12, 13 subtrahiert werden. Erfolgt dies unmittelbar, so ist die Phasenlage der durch eine bestimmte Schwingungsmode verursachten Ausgangssignale durch den Abstand 16 zwischen den Mitten 25, 26 der Empfangsbereiche 23, 24 vorgegeben. Prinzipiell kann eine Modenselektivität somit durch Wahl eines auf die entsprechende Schwingungsmode bzw. auf eine zu bedämpfende Schwingungsmode abgestellten Abstands 16 erfolgen. Variiert jedoch die Amplitude der geführten Welle bzw. der einzelnen Schwingungsmoden über die Zeit, wie dies der Fall ist, wenn die geführte Welle mit einer bestimmten Hüllkurve oder nur für kurze Zeiten angeregt wird, so würden bei einer direkten Subtraktion der Ausgangssignale die durch eine bestimmte Schwingungsmode verursachten Ausgangssignale der Empfangsschwingungswandler 12, 13 unterschiedliche Amplituden aufweisen, woraus insbesondere eine unvollständige Auslöschung einer zu bedämpfenden Schwingungsmode resultieren kann.

Um dies zu vermeiden, ist in der Messeinrichtung 1 vorgesehen, dass die Ausgangssignale des Empfangsschwingungswandlers 13 mit um eine Verzögerungszeit verzögernden Ausgangssignalen des Empfangsschwindungswandlers 12 von diesen subtrahiert werden. Die Verzögerungszeit wird hierbei vorzugsweise derart gewählt, dass sie der Laufzeit einer bestimmten Schwingungsmode der geführten Welle von der Mitte 25 des Empfangsbereichs 23 zu der Mitte 26 des Empfangsbereichs 24 entspricht. Eine Subtraktion wird genutzt, so dass eine destruktive Interferenz für die bestimmte Schwingungsmode resultiert, womit durch diese verursachte Ausgangssignale im Wesentlichen vollständig aus den Messdaten gefiltert werden. Die Verarbeitung der Ausgangssignale wird später im Detail mit Bezug auf Fig. 2 erläutert werden.

Fig. 2 zeigt eine mögliche Struktur der Steuereinrichtung 5, die das vorangehend beschriebene Vorgehen umsetzt. Zur Verdeutlichung der Datenverarbeitung sind für verschiedene Verarbeitungsschritte einzelne Komponenten 27 bis 32 der Steuereinrichtung 5 dargestellt. Bei diesen Komponenten kann es sich zwar prinzipiell um separate Signalverarbeitungskomponenten handeln, besonders bevorzugt sind jedoch alle diese Komponenten in Software implementiert und die Ein- und Ausgabe der verarbeiteten Signale erfolgt über nicht gezeigte Digital-Analog-Wandler bzw. Analog-Digital-Wandler.

Die Steuereinrichtung 5 umfasst eine zentrale Komponente 27, die einerseits dazu dient, ein gemeinsames Ansteuersignal für die Sendeschwingungswandler 7, 8 bereitzustellen und andererseits die Messdaten der Empfangsschwingungswandler 12, 13 zu erfassen und auszuwerten. Hierbei ist in Fig. 2 nur die für ein Senden von den Sendeschwingungswandlern 7, 8 zu den Empfangsschwingungswandlern 12, 13 genutzte Struktur dargestellt. Die Struktur für den umgekehrten Sendeweg ergibt sich durch Vertauschung der Sendeschwingungswandler 7, 8 mit den Empfangsschwingungswandlern 12, 13 in der Fig. 2.

Durch die Komponente 27 wird ein Ansteuersignal der Sendeschwingungswandler 7, 8 vorgegeben, wobei dessen Frequenz vorzugsweise so gewählt wird, dass genau zwei Schwingungsmoden einer Lamb-Welle der Seitenwand 6 angeregt werden können. Eine entsprechende Frequenz kann mit Hilfe der Dispersionsrelation der Seitenwand 6 bestimmt werden. Das gemeinsame Anregungssignal kann bereitgestellt werden, indem ein periodisches Signal, beispielsweise eine Sinusschwingung mit der angegebenen Frequenz, mit einer Hüllkurve amplitudenmoduliert wird, um einen Anregungspuls mit endlicher Länge zu generieren. Das Anregungssignal wird direkt genutzt, um den Sendeschwingungswandler 7 anzusteuern. Zur Ansteuerung des Sendeschwingungswandlers 8 wird es durch die Komponente 28, ein Verzögerungsglied, um die bereits vorangehend diskutierte Verzögerungszeit verzögert. Optional kann es durch die Komponente 29, ein Invertierglied, invertiert werden. Hierdurch kann, wie bereits zur Fig. 1 erläutert, eine im Wesentlichen modenreine Anregung realisiert werden.

Empfangsseitig wird das Ausgangssignal des Empfangsschwingungswandlers 12 durch die Komponente 30, ein Verzögerungsglied, wie vorangehend zur Fig. 1 diskutiert verzögert und durch die Komponente 31, einen Inverter, invertiert, bevor es durch die als Additionsglied ausgebildete Komponente 32 zu dem Ausgangssignal des Empfangsschwingungswandlers 13 addiert wird. Durch Nutzung des Invertierglieds wird bestimmt, dass eine Subtraktion des Ausgangssignals des Empfangsschwingungswandlers 13 mit dem verzögerten Ausgangssignal des Empfangsschwingungswandlers 12 erfolgt. Eine Subtraktion wird genutzt, um gezielt eine zu bedämpfende Mode im Wesentlichen vollständig aus den Messdaten zu eliminieren, wie dies bereits zur Fig. 1 erläutert wurde.

Der zur Fig. 2 erläuterte Ansatz kann mit relativ geringem Rechenaufwand bzw. Hardwareaufwand realisiert werden. Dadurch, dass sendeseitig das gesamte Anregungssignal für einen der Sendeschwingungswandler 7, 8 verzögert wird, resultiert jedoch ein fester Zusammenhang zwischen Verzögerungszeit und Phasenversatz. Die Verzögerungszeit wird so gewählt, dass sie der Laufzeit einer bestimmten Schwingungsmode zwischen den Sendeschwingungswandlern 7, 8 entspricht. Die beiden Sendeschwingungswandler 7, 8 schwingen somit entweder in Phase oder bei Nutzung des Invertierglieds gegenphasig. Dies ist zwar, wie vorangehend beschrieben, ausreichend, um eine im Wesentlichen modenreine Anregung zu erreichen. In einigen Fällen kann jedoch auch ein anderer Phasenversatz gewünscht sein.

Beispielsweise kann es gewünscht sein, dass eine bestimmte Mode der geführten Welle in Fig. 1 ausschließlich nach rechts und nicht nach links abgestrahlt wird oder umgekehrt. Eine solche gerichtete Abstrahlung kann erreicht werden, indem die Anregungsfrequenz und der Abstand 15 zwischen den Mitten 21, 22 der Anregungsbereiche 19, 20 so gewählt werden, dass der Abstand 15 einem ungeradzahligen Vielfachen der Wellenlänge der bestimmten Mode entspricht, wobei gleichzeitig die Sendeschwingungswandler 7, 8 derart angesteuert werden, dass sie mit einem Phasenversatz von 90° schwingen. Eine Möglichkeit, einen solchen oder auch einen anderen beliebigen Phasenversatz zu realisieren, wobei gleichzeitig eine Verzögerungszeit für den zeitlichen Verlauf der Schwingungsamplitude der Sendeschwingungswandler 7, 8 genutzt werden kann, wird im Folgenden mit Bezug auf Fig. 3 erläutert.

Hierzu werden zunächst zwei periodische Steuersignale 33, 34 generiert, die einen gewünschten Phasenversatz 35, im Beispiel von 90°, aufweisen. Die periodischen Steuersignale können separat voneinander generiert werden, es ist jedoch auch möglich, beispielsweise das Steuersignal 34 durch ein zeitliches Verzögerungsglied aus dem Steuersignal 33 zu generieren. Durch einen Hüllkurvengenerator 36 wird eine Hüllkurve bereitgestellt, mit der beide periodische Signale 33, 34, beispielsweise mit Hilfe von Multiplikationsgliedern 37, 38, amplitudenmoduliert werden. Hierbei wird die Hüllkurve jedoch, bevor sie dem Multiplikationsglied 38 zugeführt wird, durch ein Verzögerungsglied 39 um die vorgegebene Verzögerungszeit verzögert, um die Hüllkurve für das Steuersignal 34 bereitzustellen. Alternativ hierzu wäre es möglich, separate Hüllkurvengeneratoren für die Sendeschwingungswandler 7, 8 vorzusehen, die Hüllkurven mit gleicher Hüllkurvenform generieren und um die Verzögerungszeit verzögert nacheinander ausgelöst werden.

### Bezugszeichenliste

- 1: Messeinrichtung
- 2: Messrohr
- 3: Innenraum
- 4: Pfeil
- 5: Steuereinrichtung
- 6: Seitenwand
- 7: Sendeschwingungswandler
- 8: Sendeschwingungswandler
- 9: Ultraschallstrahl
- 10: Dicke
- 11: Seitenwand
- 12: Empfangsschwingungswandler
- 13: Empfangsschwingungswandler
- 14: Pfeil
- 15: Abstand
- 16: Abstand
- 17: Schwingungswandler
- 18: Schwingungswandler
- 19: Anregungsbereich
- 20: Anregungsbereich
- 21: Mitte
- 22: Mitte
- 23: Empfangsbereich
- 24: Empfangsbereich
- 25: Mitte
- 26: Mitte
- 27: Komponente
- 28: Komponente
- 29: Komponente
- 30: Komponente
- 31: Komponente
- 32: Komponente
- 33: Steuersignal
- 34: Steuersignal
- 35: Phasenversatz
- 36: Hüllkurvengenerator
- 37: Multiplikationsglied
- 38: Multiplikationsglied
- 39: Verzögerungsglied
- 40: Rayleigh-Winkel

## Patentansprüche

1. Verfahren zur Ermittlung einer ein Fluid und/oder eine Fluidströmung des Fluids betreffenden Fluidgröße mit einer Messeinrichtung (1), die ein das Fluid aufnehmendes und/oder von dem Fluid durchströmtes Messrohr (2) umfasst, wobei durch einen an einer Seitenwand (6) des Messrohrs (2) angeordneten ersten und zweiten Sendeschwingungswandler (7, 8) gemeinsam eine in der Seitenwand (6) des Messrohrs (2) geführte Welle angeregt und direkt in der Seitenwand (6) oder indirekt über das Fluid zu einem an der oder einer weiteren Seitenwand (11) des Messrohrs (2) angeordneten ersten und zweiten Empfangsschwingungswandlern (12, 13) oder entlang eines Ausbreitungspfades zurück zu den Sendeschwingungswandlern (7, 8) geführt und dort zur Ermittlung von Messdaten erfasst wird, wobei eine Fluidinformation, nämlich die Fluidgröße, in Abhängigkeit der Messdaten ermittelt wird, wobei
- einerseits der erste und der zweite Sendeschwingungswandler (7, 8) zur Anregung der geführten Welle derart angesteuert werden, dass der zeitliche Verlauf der Schwingungsamplitude des zweiten Sendeschwingungswandlers (8) dem um eine Verzögerungszeit verzögerten zeitlichen Verlauf der Schwingungsamplitude des ersten Sendeschwingungswandlers (7) entspricht, wobei die Verzögerungszeit derart vorgegeben wird, dass sie der Laufzeit einer bestimmten Schwingungsmode der geführten Welle zwischen der Mitte (21) eines ersten Anregungsbereichs (19), in dem der erste Sendeschwingungswandler (7) mit der Seitenwand (6) gekoppelt ist, und der Mitte (22) eines zweiten Anregungsbereichs (20), in dem der zweite Sendeschwingungswandler (8) mit der Seitenwand (6) gekoppelt ist, entspricht, wobei der Abstand (15) zwischen den Mitten (21, 22) der Anregungsbereiche (19, 20) und eine Anregungsfrequenz und relative Phase, mit der die Sendeschwingungswandler (7, 8) zur Anregung der geführten Welle schwingen, derart gewählt werden, dass die bestimmte Schwingungsmode der anzuregenden geführten Welle durch eine destruktive Interferenz der durch die einzelnen Sendeschwingungswandler (7, 8) angeregten Teilwellen zumindest in einer Ausbreitungsrichtung zumindest teilweise ausgelöscht wird,
- und/oder wobei andererseits zur Ermittlung der Messdaten Ausgangssignale des ersten Empfangsschwingungswandlers (13) und um eine weitere Verzögerungszeit verzögerte Ausgangssignale des zweiten Empfangsschwingungswandlers (12) voneinander subtrahiert werden, wobei die weitere Verzögerungszeit derart vorgegeben wird, dass sie der Laufzeit der bestimmten Schwingungsmode der geführten Welle zwischen der Mitte (25) eines zweiten Erfassungsbereichs (23), in dem der zweite Empfangsschwingungswandler (12) mit der Seitenwand (6) oder der weiteren Seitenwand (11) gekoppelt ist, und der Mitte (26) eines ersten Erfassungsbereichs (24), in dem der erste Empfangsschwingungswandler (13) mit der Seitenwand (6) oder der weiteren Seitenwand (11) gekoppelt ist, entspricht, oder Ausgangssignale des ersten Sendeschwingungswandlers (7) und um die Verzögerungszeit verzögerte Ausgangssignale des zweiten Sendeschwingungswandlers (8) voneinander subtrahiert werden, wobei die Verzögerungszeit derart vorgegeben wird, dass sie der Laufzeit der bestimmten Schwingungsmode der geführten Welle zwischen der Mitte (21) des ersten Anregungsbereichs (19), in dem der erste Sendeschwingungswandler (7) mit der Seitenwand (6) gekoppelt ist, und der Mitte (22) des zweiten Anregungsbereichs (20), in dem der zweite Sendeschwingungswandler (8) mit der Seitenwand (6) gekoppelt ist, entspricht.

2. Verfahren nach Anspruch 1, **dadurch gekennzeichnet, dass** der erste und zweite Sendeschwingungswandler (7, 8) zur Anregung der geführten Welle derart angesteuert werden, dass die Schwingung des zweiten Sendeschwingungswandlers (8) zu der um die Verzögerungszeit verzögerten Schwingung des ersten Sendeschwingungswandlers (7) entgegengesetzt ist.

3. Verfahren nach Anspruch 1, **dadurch gekennzeichnet, dass** zur Anregung der geführten Welle der erste Sendeschwingungswandler (7, 8) mit einem durch eine erste Hüllkurve amplitudenmodulierten ersten periodischen Steuersignal (33) angesteuert wird und der zweite Sendeschwingungswandler (8) mit einem durch eine zweite Hüllkurve amplitudenmodulierten zweiten periodischen Steuersignal (34) angesteuert wird, wobei das zweite periodische Steuersignal (34) gegenüber dem ersten periodischen Steuersignal (33) einen Phasenversatz (35) von 90° aufweist.

4. Verfahren nach Anspruch nach einem der vorangehenden Ansprüche, **dadurch gekennzeichnet, dass** die Laufzeit der bestimmten Schwingungsmode und somit die Verzögerungszeit in Abhängigkeit der Phasengeschwindigkeit der bestimmten Schwingungsmode vorgegeben ist oder wird.

5. Verfahren nach einem der vorangehenden Ansprüche, **dadurch gekennzeichnet, dass** die oder eine Anregungsfrequenz, mit der die Sendeschwingungswandler (7, 8) zur Anregung der geführten Welle schwingen, derart gewählt wird, dass ausschließlich die bestimmte und die oder genau eine weitere Schwingungsmode angeregt werden.

6. Verfahren nach einem der vorangehenden Ansprüche, **dadurch gekennzeichnet, dass** die oder eine Anregungsfrequenz, mit der die Sendeschwingungswandler (7, 8) zur Anregung der geführten Welle schwingen, derart gewählt wird, dass die weitere Schwingungsmode die doppelte oder halbe Wellenlänge der bestimmten Schwingungsmode aufweist.

7. Messeinrichtung, umfassend ein das Fluid aufnehmendes und/oder von dem Fluid durchströmbares Messrohr (2), einen an einer Seitenwand (6) des Messrohrs (2) angeordneten ersten und zweiten Sendeschwingungswandler (7, 8) und eine Steuereinrichtung (5), **dadurch gekennzeichnet, dass** sie zur Durchführung des Verfahrens nach einem der vorangehenden Ansprüche eingerichtet ist.

## Claims

1. Method for determining a fluid variable relating to a fluid and/or a fluid flow of the fluid with a measuring device (1), which comprises a measuring tube (2) which receives the fluid and/or through which the fluid flows, wherein a first and a second transmitting oscillation transducer (7, 8), arranged on a side wall (6) of the measuring tube (2), act together to excite a wave conducted in the side wall (6) of the measuring tube (2) and return it directly in the side wall (6) or indirectly via the fluid to a first and a second receiving oscillation transducer (12, 13), arranged on the or a further side wall (11) of the measuring tube (2), or along a propagation path to the transmitting oscillation transducers (7, 8), and it is recorded there for determining measurement data, wherein fluid information, to be specific the fluid variable, is determined on the basis of the measurement data, wherein
- on the one hand the first and the second transmitting oscillation transducer (7, 8) are activated for exciting the conducted wave in such a way that the time progression of the oscillation amplitude of the second transmitting oscillation transducer (8) corresponds to the time progression, delayed by a delay time, of the oscillation amplitude of the first transmitting oscillation transducer (7), wherein the delay time is predetermined in such a way that it corresponds to the transit time of a specific oscillation mode of the conducted wave between the centre (21) of a first excitation region (19), in which the first transmitting oscillation transducer (7) is coupled to the side wall (6), and the centre (22) of a second excitation region (20), in which the second transmitting oscillation transducer (8) is coupled to the side wall (6), wherein the distance (15) between the centres (21, 22) of the excitation regions (19, 20) and an excitation frequency and a relative phase with which the transmitting oscillation transducers (7, 8) oscillate for exciting the conducted wave are chosen in such a way that the specific oscillation mode of the conducted wave to be excited is at least partially eliminated by a destructive interference of the sub-waves excited by the individual transmitting oscillation transducers (7, 8) at least in one propagation direction,
- and/or wherein on the other hand, for determining the measurement data, output signals of the first receiving oscillation transducer (13) and output signals, delayed by a further delay time, of the second receiving oscillation transducer (12) are subtracted from one another, wherein the further delay time is predetermined in such a way that it corresponds to the transit time of the specific oscillation mode of the conducted wave between the centre (25) of a second recording region (23), in which the second receiving oscillation transducer (12) is coupled to the side wall (6) or the further side wall (11), and the centre (26) of a first recording region (24), in which the first receiving oscillation transducer (13) is coupled to the side wall (6) or the further side wall (11), or output signals of the first transmitting oscillation transducer (7) and output signals, delayed by the delay time, of the second transmitting oscillation transducer (8) are subtracted from one another, wherein the delay time is predetermined in such a way that it corresponds to the transit time of the specific oscillation mode of the conducted wave between the centre (21) of the first excitation region (19), in which the first transmitting oscillation transducer (7) is coupled to the side wall (6), and the centre (22) of the second excitation region (20), in which the second transmitting oscillation transducer (8) is coupled to the side wall (6).

2. Method according to Claim 1, **characterized in that** the first and the second transmitting oscillation transducer (7, 8) are activated for exciting the conducted wave in such a way that the oscillation of the second transmitting oscillation transducer (8) is opposed to the oscillation, delayed by the delay time, of the first transmitting oscillation transducer (7).

3. Method according to Claim 1, **characterized in that**, for exciting the conducted wave, the first transmitting oscillation transducer (7, 8) is activated with a first periodic control signal (33), amplitude-modulated by a first envelope curve, and the second transmitting oscillation transducer (8) is activated with a second periodic control signal (34), amplitude-modulated by a second envelope curve, wherein the second periodic control signal (34) has a phase offset (35) of 90° with respect to the first periodic control signal (33).

4. Method according to one of the preceding claims, **characterized in that** the transit time of the specific oscillation mode, and consequently the delay time, has been or is predetermined on the basis of the phase velocity of the specific oscillation mode.

5. Method according to one of the preceding claims, **characterized in that** the or an excitation frequency with which the transmitting oscillation transducers (7, 8) oscillate for exciting the conducted wave is chosen in such a way that exclusively the specific oscillation mode and the or precisely one further oscillation mode are excited.

6. Method according to one of the preceding claims, **characterized in that** the or an excitation frequency with which the transmitting oscillation transducers (7, 8) oscillate for exciting the conducted wave is chosen in such a way that the further oscillation mode has double or half the wavelength of the specific oscillation mode.

7. Measuring device, comprising a measuring tube (2) which receives the fluid and/or through which the fluid can flow, a first and a second transmitting oscillation transducer (7, 8), arranged on a side wall (6) of the measuring tube (2), and a control device (5), **characterized in that** it is set up for carrying out the method according to one of the preceding claims.

## Revendications

1. Procédé permettant de déterminer une grandeur de fluide concernant un fluide et/ou un écoulement de fluide du fluide avec un dispositif de mesure (1) qui comprend un tube de mesure (2) recevant le fluide et/ou traversé par le fluide, dans lequel, à l'aide d'un premier et d'un deuxième transducteur de vibrations émetteur (7, 8), disposés sur une paroi latérale (6) du tube de mesure (2), ensemble, une onde guidée dans la paroi latérale (6) du tube de mesure (2) est excitée et amenée directement dans la paroi latérale (6) ou indirectement par l'intermédiaire du fluide à un premier et à un deuxième transducteur de vibrations récepteur (12, 13), disposés sur ladite ou sur une autre paroi latérale (11) du tube de mesure (2), ou ramenée le long d'un chemin de propagation aux convertisseurs de vibration émetteurs (7, 8), et y est détectée en vue de la détermination de données de mesure, une information de fluide, à savoir la grandeur de fluide, étant déterminée en fonction des données de mesure, dans lequel
- d'une part, le premier et le deuxième transducteur de vibrations émetteur (7, 8) sont pilotés pour l'excitation de l'onde guidée de telle sorte que la courbe de temps de l'amplitude de vibration du deuxième transducteur de vibrations émetteur (8) correspond à la courbe de temps, temporisée d'un délai de temporisation, de l'amplitude de vibration du premier transducteur de vibrations émetteur (7), le délai de temporisation étant spécifié de façon à correspondre au temps de propagation d'un mode de vibration déterminé de l'onde guidée entre le milieu (21) d'une première plage d'excitation (19), dans laquelle le premier transducteur de vibrations émetteur (7) est couplé à la paroi latérale (6), et le milieu (22) d'une deuxième plage d'excitation (20), dans laquelle le deuxième transducteur de vibrations émetteur (8) est couplé à la paroi latérale (6), dans lequel la distance (15) entre les milieux (21, 22) des plages d'excitation (19, 20) et une fréquence d'excitation et une phase relative à laquelle vibrent les convertisseurs de vibrations émetteurs (7, 8) pour exciter l'onde guidée sont sélectionnées de telle sorte que le mode de vibration déterminé de l'onde guidée à exciter est éteint au moins partiellement par une interférence destructive des ondes partielles excitées par les convertisseurs de vibrations émetteurs (7, 8) individuels au moins dans une direction de propagation,
- et/ou dans lequel d'autre part, pour la détermination des données de mesure, des signaux de sortie du premier transducteur de vibrations récepteur (13) et des signaux de sortie, temporisés d'un autre délai de temporisation, du deuxième transducteur de vibrations récepteur (12) sont soustraits les uns des autres, l'autre délai de temporisation étant spécifié de façon à correspondre au temps de propagation du mode de vibration déterminé de l'onde guidée entre le milieu (25) d'une deuxième plage de détection (23) dans laquelle le deuxième transducteur de vibrations récepteur (12) est couplé à la paroi latérale (6) ou à l'autre paroi latérale (11), et le milieu (26) d'une première plage de détection (24) dans laquelle le premier transducteur de vibrations récepteur (13) est couplé à la paroi latérale (6) ou à l'autre paroi latérale (11), ou des signaux de sortie du premier transducteur de vibrations émetteur (7) et des signaux de sortie, temporisés d'un délai de temporisation, du deuxième transducteur de vibrations émetteur (8) sont soustraits les uns des autres, dans lequel le délai de temporisation est spécifié de façon à correspondre au temps de propagation du mode de vibration déterminé de l'onde guidée entre le milieu (21) de la première plage d'excitation (19) dans laquelle le premier transducteur de vibrations émetteur (7) est couplé à la paroi latérale (6), et le milieu (22) de la deuxième zone d'excitation (20) dans laquelle le deuxième transducteur de vibrations émetteur (8) est couplé à la paroi latérale (6).

2. Procédé selon la revendication 1, **caractérisé en ce que** le premier et le deuxième transducteur de vibrations émetteur (7, 8) sont pilotés pour l'excitation de l'onde guidée de telle sorte que la vibration du deuxième transducteur de vibrations émetteur (8) est opposée à la vibration, temporisée du délai de temporisation, du premier transducteur de vibrations émetteur (7).

3. Procédé selon la revendication 1, **caractérisé en ce que** pour l'excitation de l'onde guidée, le premier transducteur de vibrations émetteur (7, 8) est piloté par un premier signal de commande périodique (33), modulé en amplitude par une première enveloppante, et le deuxième transducteur de vibrations émetteur (8) est piloté par un deuxième signal de commande périodique (34), modulé en amplitude par une deuxième enveloppante, le deuxième signal de commande périodique (34) présentant un décalage de phase (35) de 90° par rapport au premier signal de commande périodique (33).

4. Procédé selon l'une quelconque des revendications précédentes, **caractérisé en ce que** le temps de propagation du mode de vibration déterminé, et donc le délai de temporisation, sont ou seront spécifiés en fonction de la vitesse de phases du mode de vibration déterminé.

5. Procédé selon l'une quelconque des revendications précédentes, **caractérisé en ce que** ladite ou une fréquence d'excitation à laquelle vibrent les convertisseurs de vibrations émetteurs (7, 8) pour l'excitation de l'onde guidée est sélectionnée de façon à exciter exclusivement le mode de vibration déterminé et ledit mode ou exactement un autre mode de vibration.

6. Procédé selon l'une quelconque des revendications précédentes, **caractérisé en ce que** ladite ou une fréquence d'excitation, à laquelle vibrent les convertisseurs de vibrations émetteurs (7, 8) pour l'excitation de l'onde guidée, est sélectionnée de telle sorte que l'autre mode de vibration présente le double ou la moitié de la longueur d'onde du mode de vibration déterminé.

7. Dispositif de mesure, comprenant un tube de mesure (2) recevant le fluide et/ou pouvant être traversé par le fluide, un premier et un deuxième transducteur de vibrations émetteur (7, 8) disposés sur une paroi latérale (6) du tube de mesure (2), et un dispositif de commande (5), **caractérisé en ce qu'**il est conçu pour exécuter le procédé selon l'une quelconque des revendications précédentes.
